# FASCICULE DE BREVET EUROPEEN

(11) **EP 2 747 939 B1**
(45) Date de publication et mention de la délivrance du brevet: **14.10.2015**
(21) Numéro de dépôt: 12744084.0
(22) Date de dépôt: 11.07.2012
(51) Int. Cl.: B24B 21/16, B21K 3/04, B23P 15/02, B24B 19/14, G01B 7/28, G01B 21/20, G05B 19/42

(54) **PROCÉDÉ DE FABRICATION D'UNE PIÈCE PAR FORGEAGE**
VERFAHREN ZUR HERSTELLUNG EINER KOMPONENTE MITTELS SCHMIEDEN
METHOD FOR MANUFACTURING A COMPONENT USING FORGING

(30) Priorité: 26.08.2011 FR 1157548
(43) Date de publication de la demande: 02.07.2014
(73) Titulaire: SNECMA, 75015 Paris (FR)
(72) Inventeur: MEREAUX, Beryl, Cassandre, Anne, F-77550 Moissy Cramayel Cedex (FR); TEBOUL, Benjamin, F-77550 Moissy Cramayel Cedex (FR)
(74) Mandataire: Robert, Mathias
(86) Numéro de dépôt international: PCT/FR2012/051646
(87) Numéro de publication internationale: WO 2013/030475

(56) Documents cités:
- WO-A1-2010/149720
- DE-A1-102006 019 135
- US-A- 5 193 314

## Description

La présente invention concerne un procédé de fabrication d'une pièce par forgeage.

Elle vise plus particulièrement la fabrication d'aubes de grandes dimensions en alliage de titane telles que les aubes de soufflante de turboréacteur et la finition de celles-ci avec mise à conformité géométrique de la pièce semi-finie issue du forgeage par une opération de polissage adaptatif.

Les aubes de soufflante de turboréacteur sont généralement produites par forgeage de précision. Le forgeage de précision consiste à opérer par frappes successives d'une ébauche dans des matrices appropriées jusqu'à l'obtention d'une pièce semi-finie présentant une forme et des caractéristiques dimensionnelles proches de celles de la pièce finie. Dans le cas d'une aube de soufflante semi-finie sortant de forgeage, la pale n'est pas conforme aux caractéristiques géométriques à obtenir, en raison des faibles tolérances dimensionnelles à respecter. Les caractéristiques géométriques de la pale comprennent par exemple un vrillage qui est une rotation des sections de la pale sur l'axe d'empilage, un flambage qui est une flexion de la pale par rapport à l'axe d'empilage et des points de référence, une ondulation et un défaut de forme.

Une mise à conformité de la pale est donc nécessaire. Globalement, celle-ci consiste à corriger le profil de l'extrados et de l'intrados en enlevant de la matière aux endroits de la pale présentant une surépaisseur par rapport à un profil théorique. Dans le cas du forgeage de précision, la correction porte sur l'enlèvement d'une surépaisseur allant jusqu'à quelques dixièmes de millimètre, entre 0,4 et 0,7 mm en général.

On détermine pour cela un nombre de points correspondant au profil théorique, répartis selon un réseau s'étendant le long de l'axe de la pale et entre le bord d'attaque et le bord de fuite. On mesure les caractéristiques géométriques de l'aube semi-finie en ces points à l'aide d'un palpeur tridimensionnel. Le brevet EP 1 596156, au nom de la Demanderesse, décrit un tel palpeur. On connaît ainsi la différence entre la géométrie théorique à obtenir et la géométrie réelle de la pale.

Selon l'art antérieur, on procède ensuite à l'opération dite « de tri épaisseur » qui consiste à analyser et protéger par application d'un revêtement les zones les moins épaisses de la pièce. Cette opération est effectuée principalement de façon manuelle. On enlève ensuite, entre ces zones protégées, l'excédent de matière par un usinage chimique, qui consiste à maintenir pendant une durée déterminée la pièce dans un bain d'acide propre à attaquer le métal. On procède ensuite à une reprise manuelle par polissage local et itératif des zones hors tolérance présentant des défauts d'aspect et des traces de l'usinage chimique. Il s'agit pour cette opération d'un polissage dit de premier aspect. Manuellement, le cas échéant, on retouche la pièce pour que sa forme entre dans les tolérances imposées.

Enfin un polissage automatisé, dit d'aspect final, assure la continuité du profil aérodynamique et l'état de surface nécessaire au bon écoulement du flux d'air. Le polissage automatisé est généralement réalisé au moyen d'une bande abrasive. On utilise par exemple une bande dont le matériau abrasif est du carbure de silicium. La bande est montée sur une roue entraînée en rotation tangentiellement à la surface de la pièce. Le déplacement de la roue par rapport à la surface est piloté par un programme prenant en compte la géométrie de la surface à polir. Les paramètres de polissage tels que la vitesse de défilement de la bande abrasive sur la surface, la vitesse de déplacement de la roue par rapport à la pièce ainsi que la pression exercée sur la surface et le grain du matériau abrasif sont déterminés de manière à enlever l'épaisseur requise de matière et assurer l'état de surface voulu. On trouve une description d'une machine de polissage par bande abrasive dans le brevet US 5 193 314.

Les opérations manuelles décrites ci-dessus sont pénibles pour les opérateurs, surtout lorsque ces derniers doivent travailler sur des pièces lourdes comme les aubes de soufflante de turboréacteur, et requièrent des contrôles.

La demande de brevet WO 2010/149720, au nom de la Demanderesse, vise à remplacer ces opérations manuelles par des opérations automatisées qui libèrent les opérateurs.

Le procédé décrit dans cette demande de brevet consiste à :
- réaliser une pièce semi-finie par forgeage,
- mesurer les caractéristiques géométriques de la pièce semi-finie,
- comparer la géométrie mesurée de la pièce semi-finie à une géométrie théorique de la pièce à obtenir et en déduire des zones non conformes à la géométrie théorique ainsi que les épaisseurs de matière à enlever dans lesdites zones non conformes,
- polir les zones non conformes de la pièce semi-finie de façon à enlever l'épaisseur de matière souhaitée, à l'aide d'une bande abrasive pilotée.

Le pilotage de la bande est réalisé en faisant varier la vitesse d'avance relative de la pièce par rapport à la bande abrasive, les autres paramètres de polissage étant maintenus constants.

Une relation est établie entre l'épaisseur de matière à enlever, également appelée enlèvement, et la vitesse d'avance relative précitée. Cette relation est établie par des mesures et/ou par calcul et permet de déterminer, pour chacune des zones non conformes à usiner et à partir d'un enlèvement souhaité, la vitesse d'avance à appliquer. Plus cette vitesse est faible, plus l'enlèvement est important.

On a constaté que la géométrie de la pièce obtenue après polissage adaptatif présentait toujours des écarts dimensionnels relativement importants avec la géométrie théorique de la pièce à obtenir.

L'invention a notamment pour but d'apporter une solution simple, efficace et économique à ce problème.

A cet effet, elle propose un procédé de fabrication d'une pièce par forgeage, comprenant les étapes consistant à :
- réaliser une pièce semi-finie par forgeage,
- mesurer les caractéristiques géométriques de la pièce semi-finie,
- comparer la géométrie mesurée de la pièce semi-finie à une géométrie théorique de la pièce à obtenir et en déduire des zones non conformes à la géométrie théorique ainsi que les épaisseurs de matière à enlever dans lesdites zones non conformes,
   - polir les zones non conformes de la pièce semi-finie de façon à enlever l'épaisseur de matière souhaitée, à l'aide d'une bande abrasive pilotée,
caractérisé en ce que le pilotage de la bande abrasive tient compte d'au moins un paramètre représentatif de l'usure de la bande abrasive au cours du polissage des zones non conformes, qui est choisi parmi les paramètres suivants : distance parcourue par la bande abrasive lors du polissage des zones précédentes, vitesse moyenne d'avance relative de la pièce par rapport à la bande abrasive lors du polissage des zones précédentes, vitesse moyenne de défilement de la bande abrasive lors du polissage des zones précédentes, temps de polissage des zones précédentes.

La prise en compte de l'usure dans le pilotage de la bande abrasive permet d'obtenir des pièces qui, après polissage adaptatif, ont une géométrie proche de la géométrie théorique à obtenir.

La Demanderesse a en effet constaté que l'usure progressive de la bande abrasive lors du polissage des zones non conformes influe sur l'épaisseur de matière enlevée lors du polissage. Une telle constatation n'avait pas été effectuée jusqu'alors.

Un ou plusieurs des paramètres représentatifs de l'usure précités peuvent être pris en compte pour piloter la bande abrasive.

De préférence, le pilotage de la bande abrasive comprend le pilotage de la vitesse d'avance relative de la pièce par rapport à la bande abrasive.

Dans ce cas, la vitesse de défilement de la bande abrasive et l'effort presseur exercé par la bande abrasive sur la pièce peuvent être fixes au cours du polissage.

Les machines utilisées pour le polissage présentent un temps de réponse plus faible lors du changement de la vitesse d'avance, que lors du changement de la vitesse de défilement de la bande (fonction de la vitesse de rotation de la roue d'entraînement de la bande) ou lors du changement de l'effort presseur exercé par la bande abrasive.

On pilote ainsi préférentiellement le paramètre dont le changement présente le temps de réponse le plus faible.

Selon une autre caractéristique de l'invention, pour chaque type de pièce semi-finie à polir, on détermine préalablement des abaques ou des relations mathématiques visant à déterminer la vitesse d'avance relative de la pièce par rapport à la bande abrasive en fonction de l'épaisseur de matière à enlever dans la zone non conforme et en fonction d'au moins un paramètre représentatif de l'usure de la bande lors du polissage des zones non conformes.

Ces abaques ou ces relations mathématiques permettent de déduire, par lecture ou par le calcul, la vitesse d'avance à adopter en fonction de l'enlèvement souhaité, tout en tenant compte de l'usure de la bande.

De préférence, les abaques ou les relations mathématiques visent à déterminer la vitesse d'avance relative de la pièce par rapport à la bande abrasive en fonction de l'épaisseur de matière à enlever dans la zone non conforme, de la vitesse moyenne d'avance relative de la pièce par rapport à la bande abrasive lors du polissage des zones précédentes et de la distance parcourue par la bande abrasive lors du polissage des zones précédentes.

De manière avantageuse, les abaques ou les relations mathématiques sont déterminés par une calibration réalisée à partir de pièces du même type que la pièce à polir et ayant déjà subi un polissage à l'aide d'une bande abrasive du même type, pour lesquelles les épaisseurs de matière enlevée ont été mesurées dans différentes zones et pour lesquelles les paramètres d'usinage desdites zones sont connus, les mesures et les paramètres d'usinage définissant un ensemble de points.

Deux pièces sont du même type lorsqu'elles sont par exemple réalisées dans le même matériau et deux bandes sont du même type lorsque, par exemple, leurs grains abrasifs présentent une dureté et une granulométrie similaires.

Selon une autre caractéristique de l'invention, le procédé consiste à réaliser une interpolation à partir des points mesurés de manière à les relier entre eux par des fonctions mathématiques, telles par exemple que des fonctions polynomiales ou des fonctions affines.

Une telle interpolation permet, à partir d'un faible nombre de points, de déterminer des lois ou des points intermédiaires pouvant être utilisés pour la détermination de la vitesse d'avance relative de la pièce par rapport à la bande abrasive, pour différentes épaisseurs de matière à enlever et pour différentes valeurs du ou des différents paramètres représentatifs de l'usure de la bande.

A titre d'exemple, il a été constaté que des fonctions polynomiales permettent de calculer, par approximation, l'enlèvement en fonction de la vitesse d'avance, de la distance parcourue ou encore de la vitesse moyenne d'avance antérieure. L'interpolation permet de déterminer, à partir des quelques points mesurés sur des pièces déjà polies, les différents coefficients de ces fonctions polynomiales. Une fois que ces fonctions sont définies, l'un des paramètres peut être calculé à partir des autres paramètres. Comme vu précédemment, les paramètres d'entrée sont de préférence l'enlèvement voulu, la vitesse d'avance antérieure moyenne, et la distance déjà parcourue par la bande abrasive. Le paramètre de sortie, calculé à partir des paramètres d'entrée, est de préférence la vitesse d'avance relative servant au pilotage de la bande abrasive.

Selon une autre caractéristique de l'invention, la pièce subit en outre un polissage final visant à enlever une épaisseur uniforme de matière sur au moins une partie de la pièce.

La pièce est par exemple une aube de turbomachine.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 représente schématiquement une aube de turbomachine vue de profil,
- la figure 2 représente une machine de polissage à bande abrasive,

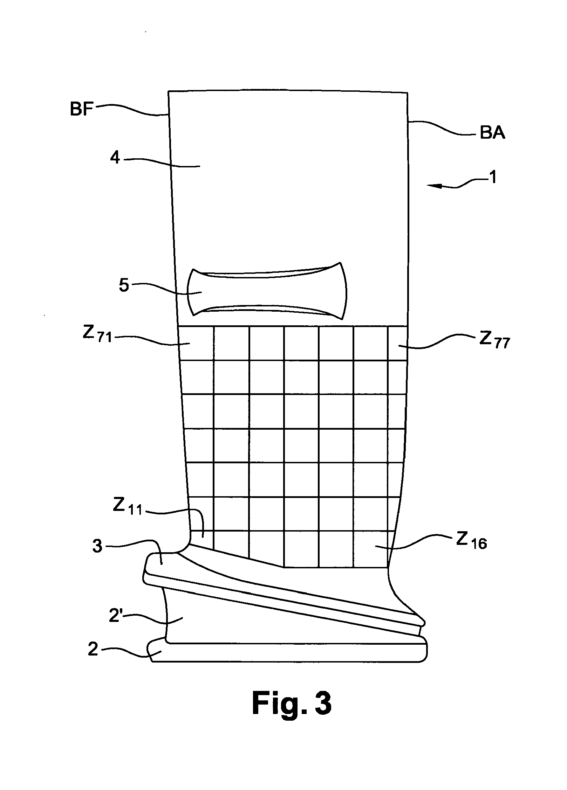

- la figure 3 est une vue de profil de l'aube, une cartographie des zones nécessitant un enlèvement de matière ayant été appliquée sur une partie de la surface de l'aube,
- la figure 4 est un diagramme en trois dimensions illustrant, pour une vitesse d'avance relative donnée, l'enlèvement en fonction de la distance antérieure et de la vitesse d'avance antérieure moyenne,
- la figure 5 est un diagramme en deux dimensions illustrant, pour une vitesse d'avance antérieure moyenne et une distance antérieure données, l'enlèvement en fonction de la vitesse d'avance relative de la pièce par rapport à la bande abrasive.

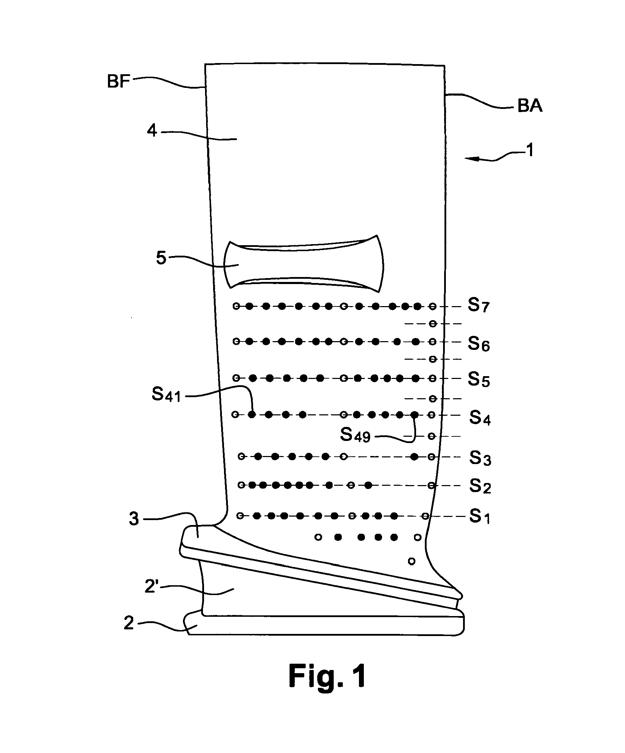

La figure 1 illustre une aube de soufflante de turboréacteur semi-finie 1 s'étendant radialement, en alliage de titane et réalisée par forgeage de précision. L'aube 1 comprend un bulbe 2, une échasse 2', une plate-forme 3 (le bulbe 2, l'échasse 2' et la plate-forme 3 formant le pied) et une pale 4 destinée à être balayée par l'air entrant dans le turboréacteur. Des ailerons ou nageoires intermédiaires 5 s'étendant depuis des surfaces d'intrados et d'extrados de la pale 4 forment des appuis pour des aubes adjacentes 1.

La face intrados et la face extrados s'étendent entre un bord d'attaque BA et un bord de fuite BF le long desquels elles se rejoignent.

Une pluralité de sections ou de coupes de la pale est illustrée à la figure 1. Ces sections S₁ à S₇ sont parallèles entre elles et écartées les unes des autres suivant l'axe longitudinal de l'aube (axe d'empilement). La position des sections est définie par rapport à un ou plusieurs plans de référence, par exemple du bulbe 2 du pied d'aube. Des points sont définis sur les surfaces d'intrados et d'extrados, au niveau de chacune des sections S₁ à S₇. Il est ainsi possible de définir la géométrie de la pale 4 par les coordonnées tridimensionnelles de ces points.

Dans l'exemple représenté, la partie de la pale 4 située entre la plateforme 3 et l'aileron ou nageoire 5 pour l'intrados est définie par sept sections, référencées S₁ à S₇. Sur chacune des sections, on a repéré des points à la surface de la pale 4 entre les bords de fuite BF et d'attaque BA. Par exemple, la section référencée S₄ comprend les points repérés S₄₁ à S₄₉ entre le bord de fuite BF et le bord d'attaque BA. Comme dans le procédé de l'art antérieur, on commence par mesurer au moyen d'un robot de mesures tridimensionnelles, les caractéristiques géométriques de l'aube 1 semi-finie issue du forgeage.

La demanderesse a décrit un exemple de procédé et d'appareillage permettant la mesure simultanée des caractéristiques géométriques d'une pluralité de points répartis à la surface d'une aube dans le brevet EP 1 596 156. La mesure tridimensionnelle des coordonnées d'un ensemble de points prédéterminés de la surface d'une pièce mécanique par rapport à un référentiel prédéterminé, comporte :
- une phase préparatoire, dans laquelle on mesure simultanément les coordonnées des points prédéterminés de la surface d'une première pièce mécanique prise pour pièce étalon,
- une phase d'initialisation, dans laquelle on relève les mesures linéaires de déplacement selon les normales des points de ladite pièce étalon,
- une phase de mesure, dans laquelle on relève les mesures linéaires de déplacement sur les points de la pièce à mesurer correspondant aux points de la pièce étalon,
- une phase de calcul, dans laquelle on calcule les coordonnées tridimensionnelles des points de la pièce à mesurer à partir des coordonnées tridimensionnelles des points de ladite pièce étalon, des mesures linéaires, et des cosinus directeurs des normales théoriques en ces points.

Avec ce calcul, effectué en chacun des points de mesure sur les sections prédéfinies, on est à même d'effectuer un relevé des zones non conformes, c'est-à-dire des zones présentant pour les points considérés une surépaisseur, en tenant compte d'un éventuel défaut de forme de la pièce.

Il est également possible d'utiliser, à la place d'une pièce étalon réelle, une géométrie à obtenir générée par un logiciel de conception assistée par ordinateur (CAO).

Pour chacune des zones non conformes, on obtient ainsi une épaisseur de matière à enlever pour que ces zones soient conformes. Cette épaisseur de matière est également appelée l'enlèvement.

Le procédé de l'invention comprend, après la détermination des enlèvements, la réalisation d'une cartographie de ces enlèvements. A cet effet, les surfaces à polir sont décomposées en zones Z₁₁, ..., Z₇₇ qui peuvent être soit conformes, soit non conformes. La cartographie indique, pour chacune des zones non conformes, la valeur de l'enlèvement de matière à réaliser afin de rendre l'aube conforme.

Les surfaces de la pale 4 sont ensuite polies dans une machine automatisée qui réalise les enlèvements de matière en fonction de la cartographie établie.

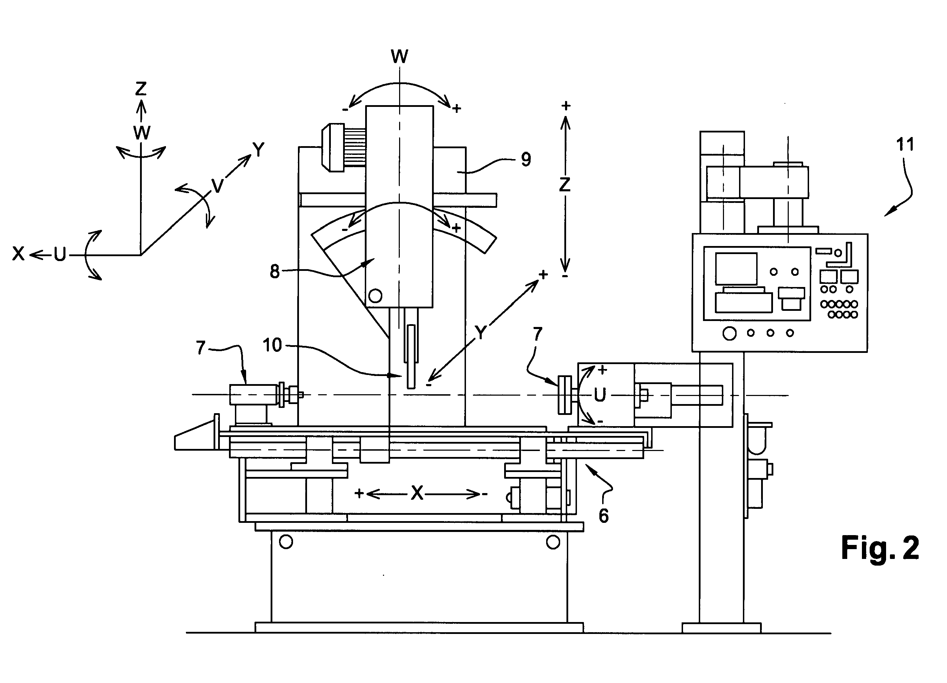

On décrit ci-après, en référence à la figure 2, un exemple de machine de polissage utilisée pour la mise en oeuvre du procédé selon l'invention.

La machine 1 illustrée sur la figure 2 est disponible dans le commerce et fournie par la société IBS. Une table 6 comprend deux mors 7 entre lesquelles l'aube 1 est maintenue horizontalement. L'ensemble formé par l'aube 1 et son support peut se déplacer dans cette direction X ou tourner sur lui-même autour de cet axe dans la direction U à l'aide de moteurs électriques. Au dessus de la table, une tête 8 est montée sur un pylône vertical 9 et peut se déplacer le long de son axe Z. La tête 8 peut également pivoter autour de cet axe Z, comme cela est indiqué par la flèche W. Des moteurs sont prévus pour l'entraînement de la tête dans les deux directions. Enfin la tête 8 peut se déplacer horizontalement dans la direction Y perpendiculaire à la direction X et pivoter selon la direction V autour de cet axe. Des moteurs assurent ces déplacements. La tête 8 supporte une roue 10 de contact mobile autour d'un axe fixe par rapport à la tête. Un moteur monté sur la tête 8 assure l'entraînement de la roue 10 à l'aide d'une bande abrasive qui est montée en périphérie de la roue 10. Les moteurs sont reliés à un boîtier de commande qui comporte une unité de commande 11 avec des moyens de programmation et des mémoires incorporant notamment les données des caractéristiques géométriques de l'aube à polir. Pour polir l'aube, on applique la bande localement, tangentiellement à sa surface, en exerçant une pression déterminée et on met en mouvement la bande, qui tourne alors avec la roue 10.

La valeur de l'enlèvement et l'état de surface obtenu dépendent de plusieurs paramètres, tels notamment que :
- le grain de la bande abrasive,
- la vitesse de défilement de la bande par la rotation de la roue 10 autour de son axe,
- la pression de la bande sur la surface de l'aube exercée par la roue 10,
- la vitesse d'avance relative de la bande le long de l'aube, qui est dans ce cas la vitesse d'avance relative de la table, c'est-à-dire de l'aube, par rapport à la bande selon l'axe X.

Dans la forme de réalisation qui sera décrite ci-après, le polissage des zones non conformes est réalisé en pilotant la vitesse d'avance relative entre l'aube et la bande de polissage, de préférence en gardant constantes la pression de contact et la vitesse de rotation de la bande (également appelée vitesse de défilement de la bande). La machine est pilotée à partir de la cartographie des enlèvements de matière. Elle est traduite pour la machine en une cartographie de vitesses d'avance relatives de l'aube par rapport à la bande de polissage.

Afin que la géométrie de l'aube obtenue après polissage soit conforme à la géométrie désirée, il est nécessaire que le pilotage de la bande abrasive tienne compte d'au moins un paramètre représentatif de l'usure de la bande abrasive au cours du polissage.

Dans l'exemple qui suit, le pilotage de la bande abrasive est réalisé en tenant compte, pour chacune des zones non conformes à polir, de la distance parcourue par la bande abrasive lors du polissage des zones précédentes (appelée ci-après distance parcourue ou distance antérieure) et de la vitesse moyenne d'avance relative de l'aube par rapport à la bande abrasive lors du polissage des zones précédentes (appelée ci-après vitesse moyenne antérieure).

Les relations entre ces différents paramètres sont obtenues à partir d'abaques ou de relations mathématiques visant à déterminer la vitesse d'avance relative de l'aube par rapport à la bande abrasive en fonction de l'enlèvement désiré dans la zone non conforme, de la vitesse moyenne antérieure et de la distance antérieure.

On décrira dans ce qui suit la manière dont les abaques sont formés ainsi que la manière dont les relations mathématiques entre ces différents paramètres sont obtenues. On expliquera ensuite comment la valeur de la vitesse d'avance relative de l'aube par rapport à la bande peut être déduite des abaques ou des relations mathématiques précités.

Les abaques ou les relations mathématiques sont déterminés à partir d'aubes du même type que l'aube à polir et ayant déjà subi un polissage à l'aide d'une bande abrasive du même type, pour lesquelles les enlèvements ont été mesurés dans différentes zones et pour lesquelles les paramètres d'usinage desdites zones sont connus, les mesures et les paramètres d'usinage définissant un ensemble de points.

Deux aubes sont du même type lorsqu'elles sont par exemple réalisées dans le même matériau et deux bandes sont du même type lorsque, par exemple, leurs grains abrasifs présentent une dureté et une granulométrie similaires.

Pour chacun des points, on définit la vitesse d'avance relative de l'aube par rapport à la bande abrasive (ci-après dénommée vitesse d'avance), la vitesse moyenne antérieure, l'enlèvement réalisé et la distance antérieure.

Pour une même vitesse d'avance (V) et pour une même distance antérieure (D), on peut considérer par exemple, par approximation, que l'enlèvement (E) dépend de la vitesse moyenne antérieure (notée VMA) suivant une loi polynomiale du second degré. En d'autre termes, pour D et V constantes, E=f₁(VMA) où f₁ est une fonction polynomiale de type a₂x² + a₁x + a₀. Connaissant plusieurs points appartenant à cette courbe, une opération d'interpolation permet de calculer les coefficients a₂, a₁ et a₀ (appelés coefficients de la fonction polynomiale) et d'en déduire la fonction f₁.

De même, pour une même vitesse d'avance (V) et pour une même vitesse moyenne antérieure (VMA), on peut considérer par approximation que l'enlèvement (E) dépend de la distance antérieure (D) suivant une loi polynomiale du second degré dont les coefficients peuvent être déterminés par interpolation à partir de plusieurs points connus.

En outre, pour une même distance antérieure (D) et pour une même vitesse moyenne antérieure (VMA), on peut considérer par approximation que l'enlèvement (E) dépend de la vitesse d'avance (V) suivant une loi polynomiale du second degré dont les coefficients peuvent être déterminés par interpolation à partir de plusieurs points connus.

En procédant ainsi par interpolation, il est possible de définir des abaques représentant, pour une vitesse d'avance (V) déterminée, l'enlèvement (E) en fonction de la vitesse moyenne antérieure (VMA) et de la distance antérieure (D). D'autres courbes pourraient également être obtenues, les lois permettant de relier les différents paramètres étant à présent connues.

On remarque que l'enlèvement diminue lorsque la distance antérieure D augmente. En effet, l'enlèvement réalisé est d'autant plus faible que l'usure de la bande est importante et cette usure augmente avec la distance antérieure D. De même, l'enlèvement E diminue lorsque la vitesse moyenne antérieure VMA augmente et lorsque la vitesse d'avance relative V augmente.

La bande abrasive étant pilotée en vitesse d'avance relative, il convient de déterminer la vitesse d'avance relative V à appliquer, pour une zone non conforme à polir, afin d'obtenir l'enlèvement E recherché dans cette zone.

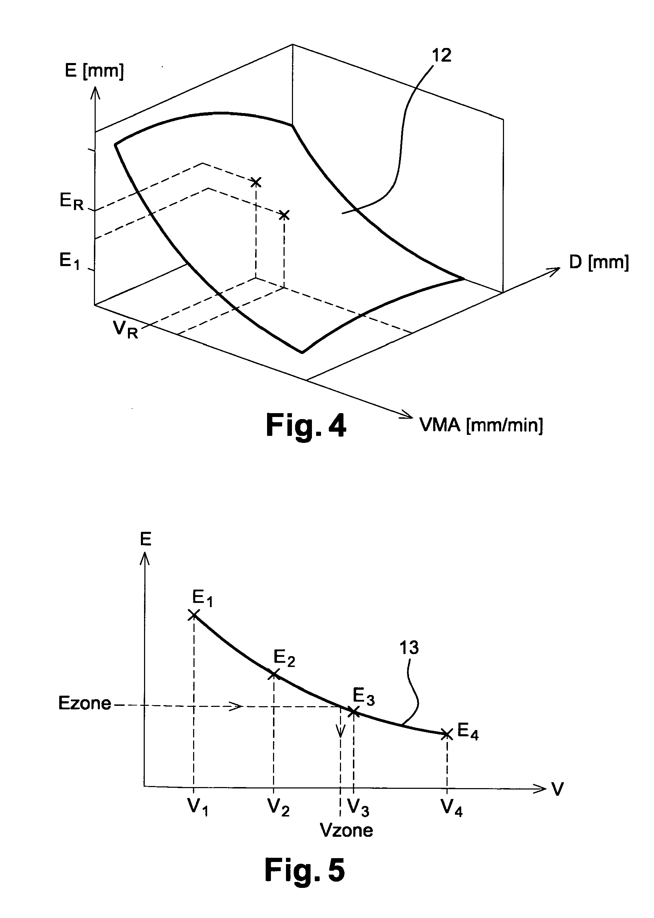

Pour cela, une méthode consiste à utiliser les courbes 12 illustrées à la figure 4. La distance parcourue par la bande avant d'atteindre cette zone, c'est-à-dire la distance antérieure D, peut être déterminée aisément, de même que la vitesse moyenne antérieure VMA. Il convient donc de lire l'enlèvement E₁ correspondant à cette distance parcourue D et à cette vitesse moyenne antérieure VMA, sur la courbe 12. Cet enlèvement E correspond à une vitesse d'avance relative V₁ donnée.

On procède ainsi pour plusieurs vitesses différentes (V₁, V₂, V₃, V₄). On reporte sur un diagramme (figure 5) les valeurs E₁, E₂, E₃, E₄ correspondant respectivement aux vitesses V₁, V₂, V₃, V₄ et on obtient par interpolation la courbe 13 correspondant à la fonction polynomiale du second degré (par exemple) passant par ces points. Il ne reste alors plus qu'à déterminer la valeur de la vitesse d'avance relative (V_{zone}) à appliquer à la zone et correspondant à l'enlèvement recherché de la zone (E_{zone}). Cet enlèvement est par exemple compris entre 0,2 et 0,7 mm.

Bien entendu, de telles lectures sur des abaques ne sont pas réalisées manuellement par un opérateur, ces opérations de calcul étant réalisées par des moyens de calcul de la machine, et les résultats obtenus sont transmis aux moyens de commande et de pilotage 11 de la machine de polissage.

Les diagrammes ne sont utilisés ici qu'afin de représenter les phénomènes en jeu. Les différentes valeurs des paramètres et les fonctions peuvent être calculées directement par les moyens de calcul de la machine, sans nécessairement recourir à l'établissement de tels diagrammes.

Une autre méthode, plus approximative, consiste, une fois la valeur de E₁ relevée, pour une vitesse V₁, à comparer E₁ avec la valeur de l'enlèvement recherché E_{R}. Sauf exception, cet enlèvement E₁ ne correspond pas exactement à la valeur de l'enlèvement recherché E_{R}. Par approximation, il est possible de déterminer (pour la distance antérieure D connue), une nouvelle valeur de vitesse sur l'axe VMA, notée V_{R}, correspondant à l'enlèvement recherché E_{R}, à partir de la courbe en trois dimensions. Cette vitesse V_{R} peut être utilisée en tant que vitesse d'avance relative pour le pilotage de la bande abrasive. Cette méthode, plus rapide, est aussi moins précise que la méthode exposée précédemment. Elle apparaît néanmoins suffisante pour réaliser des aubes dont les géométries répondent aux tolérances dimensionnelles fixées actuellement.

Après ce polissage adaptatif prenant en compte l'usure de bande, l'aube peut ensuite subir un polissage final avec une bande abrasive de grain plus fin, visant à enlever une épaisseur uniforme de matière sur au moins une partie de la pale pour effacer les défauts d'aspect éventuels. Dans ce cas, une surépaisseur correspondante, de l'ordre de 0,7 mm par exemple, doit être prévue.

## Revendications

1. Procédé de fabrication d'une pièce par forgeage, comprenant les étapes consistant à :
- réaliser une pièce semi-finie (1) par forgeage,
- mesurer les caractéristiques géométriques de la pièce semi-finie (1),
- comparer la géométrie mesurée de la pièce semi-finie à une géométrie théorique de la pièce à obtenir et en déduire des zones non conformes (Z) à la géométrie théorique ainsi que les épaisseurs de matière à enlever dans lesdites zones non conformes,
- polir les zones non conformes (Z) de la pièce semi-finie (1) de façon à enlever l'épaisseur de matière souhaitée, à l'aide d'une bande abrasive pilotée,
**caractérisé en ce que** le pilotage de la bande abrasive tient compte d'au moins un paramètre (VMA, D) représentatif de l'usure de la bande abrasive au cours du polissage des zones non conformes, qui est choisi parmi les paramètre suivants : distance (D) parcourue par la bande abrasive lors du polissage des zones précédentes, vitesse moyenne d'avance relative (VMA) de la pièce par rapport à la bande abrasive lors du polissage des zones précédentes, vitesse moyenne de défilement de la bande abrasive lors du polissage des zones précédentes, temps de polissage des zones précédentes.

2. Procédé selon la revendication 1, **caractérisé en ce que** le pilotage de la bande abrasive comprend le pilotage de la vitesse d'avance relative (V) de la pièce par rapport à la bande abrasive.

3. Procédé selon la revendication 2, **caractérisé en ce que** la vitesse de défilement de la bande abrasive et l'effort presseur exercé par la bande abrasive sur la pièce (1) sont fixes au cours du polissage.

4. Procédé selon l'une des revendications 1 à 3, **caractérisé en ce que**, pour chaque type de pièce semi-finie (1) à polir, on détermine préalablement des abaques ou des relations mathématiques visant à déterminer la vitesse d'avance relative de la pièce (1) par rapport à la bande abrasive en fonction de l'épaisseur de matière à enlever (E) dans la zone non conforme (Z) et en fonction d'au moins un paramètre (VMA, D) représentatif de l'usure de la bande lors du polissage des zones non conformes (Z).

5. Procédé selon la revendication 4, **caractérisé en ce que** les abaques ou les relations mathématiques visent à déterminer la vitesse d'avance relative (V) de la pièce (1) par rapport à la bande abrasive en fonction de l'épaisseur de matière à enlever (E) dans la zone non-conforme (Z), de la vitesse moyenne d'avance relative de la pièce par rapport à la bande abrasive lors du polissage des zones précédentes et de la distance (D) parcourue par la bande abrasive lors du polissage des zones précédentes.

6. Procédé selon la revendication 4 ou 5, **caractérisé en ce que** les abaques ou les relations mathématiques sont déterminés à partir de pièces du même type que la pièce à polir (1) et ayant déjà subi un polissage à l'aide d'une bande abrasive du même type, pour lesquelles les épaisseurs de matière enlevée ont été mesurées dans différentes zones et pour lesquelles les paramètres d'usinage desdites zones sont connus, les mesures et les paramètres d'usinage définissant un ensemble de points.

7. Procédé selon la revendication 6, **caractérisé en ce qu'**il consiste à réaliser une interpolation à partir des points mesurés de manière à les relier entre eux par des fonctions mathématiques, telles par exemple que des fonctions polynomiales ou des fonctions affines.

8. Procédé selon l'une des revendications 1 à 7, **caractérisé en ce que** la pièce subit en outre un polissage final visant à enlever une épaisseur uniforme de matière sur au moins une partie de la pièce (1).

9. Procédé selon l'une des revendications 1 à 8, **caractérisé en ce que** la pièce est une aube (1) de turbomachine.

## Patentansprüche

1. Verfahren zum Herstellen eines Schmiedeteils, das die nachfolgenden Schritte umfasst:
- Erzeugen eines halbfertigen Schmiedeteils (1),
- Messen der geometrischen Eigenschaften des halbfertigen Teils (1),
- Vergleichen der gemessenen Geometrie des halbfertigen Teils mit einer theoretischen Geometrie des zu erhaltenden Teils und davon Ableiten auf Bereiche (Z), die nicht konform sind mit der theoretischen Geometrie, sowie auf abzutragende Materialdicken in den nicht konformen Bereichen,
- Polieren der nicht konformen Bereiche (Z) des halbfertigen Teils (1) derart, dass die gewünschte Materialdicke mit Hilfe eines gesteuerten Schleifbandes abgetragen wird,
**dadurch gekennzeichnet, dass** beim Steuern des Schleifbandes zumindest ein Parameter (VMA, D) berücksichtigt wird, der repräsentativ ist für die Abnutzung des Schleifbandes während des Polierens der nicht konformen Bereiche und der ausgewählt ist aus den nachfolgenden Parametern: Entfernung (D), welche das Schleifband beim Polieren der vorherigen Bereiche zurücklegt, die durchschnittliche, relative Vorschubgeschwindigkeit (VMA) des Teils bezüglich des Schleifbands beim Polieren der vorherigen Bereiche, durchschnittliche Laufgeschwindigkeit des Schleifbandes beim Polieren der vorherigen Bereiche, Zeit zum Polieren der vorherigen Bereiche.

2. Verfahren nach Anspruch 1, **dadurch gekennzeichnet, dass** das Steuern des Schleifbandes das Steuern der relativen Vorschubgeschwindigkeit (V) des Teils bezüglich des Schleifbandes umfasst.

3. Verfahren nach Anspruch 2, **dadurch gekennzeichnet, dass** die Laufgeschwindigkeit des Schleifbandes und die von dem Schleifband auf das Teil (1) ausgeübte Andrückkraft während des Polierens fest sind.

4. Verfahren nach einem der Ansprüche 1 bis 3, **dadurch gekennzeichnet, dass** für jede Art von zu polierendem, halbfertigen Teil (1) vorher Diagramme bzw. mathematische Relationen festgelegt werden, die darauf abzielen, die relative Vorschubgeschwindigkeit des Teils (1) bezüglich des Schleifbandes in Abhängigkeit von der abzutragenden Materialdicke (E) in dem nicht konformen Bereich (Z) und in Abhängigkeit von zumindest einem Parameter (VMA, D) zu bestimmen, der repräsentativ ist für die Abnutzung des Bandes beim Polieren der nicht konformen Bereiche (Z).

5. Verfahren nach Anspruch 4, **dadurch gekennzeichnet, dass** die Diagramme bzw. mathematischen Relationen darauf abzielen, die relative Vorschubgeschwindigkeit (V) des Teils (1) bezüglich des Schleifbandes in Abhängigkeit von der abzutragenden Materialdicke (E) in dem nicht konformen Bereich (Z), von der relativen durchschnittlichen Vorschubgeschwindigkeit des Teils bezüglich des Schleifbands beim Polieren der vorherigen Bereiche und von der Entfernung (D), die von dem Schleifband beim Polieren der vorherigen Bereiche zurückgelegt wird, zu bestimmen.

6. Verfahren nach Anspruch 4 oder 5, **dadurch gekennzeichnet, dass** die Diagramme bzw. mathematischen Relationen ausgehend von Teilen der gleichen Art wie das zu polierende Teil (1) bestimmt werden, welche bereits ein Polieren mit Hilfe eines Schleifbandes gleicher Art erfahren haben, bei denen die abgetragenen Materialdicken in verschiedenen Bereichen gemessen wurden und bei denen die Bearbeitungsparameter zum Bearbeiten der Bereiche bekannt sind, wobei die Messungen und die Bearbeitungsparameter eine Punktemenge definieren.

7. Verfahren nach Anspruch 6, **dadurch gekennzeichnet, dass** es darin besteht, eine Interpolation ausgehend von den Messpunkten so herzustellen, dass sie über mathematische Funktionen miteinander verbunden werden, beispielsweise über polynomiale Funktionen oder lineare Funktionen.

8. Verfahren nach einem der Ansprüche 1 bis 7, **dadurch gekennzeichnet, dass** das Teil ferner ein Endpolieren erfährt, das darauf abzielt, eine einheitliche Materialdicke über zumindest einen Abschnitts des Teils (1) abzutragen.

9. Verfahren nach einem der Ansprüche 1 bis 8, **dadurch gekennzeichnet, dass** das Teil eine Schaufel (1) einer Turbomaschine bzw. eines Turbotriebwerks ist.

## Claims

1. A method of fabricating a part by forging, the method comprising the steps consisting in:
• making a semi-finished part (1) by forging;
• measuring the geometrical characteristics of the semi-finished part (1);
• comparing the measured shape of the semi-finished part with a theoretical shape that is to be obtained for the part, and deducing therefrom zones (Z) that are not in compliance with the theoretical shape and also the thicknesses of material that need to be removed from said zones that are not in compliance; and
• polishing the zones (Z) of the semi-finished part (1) that are not in compliance so as to remove the desired thicknesses of material by using a controlled abrasive band;
the method being **characterized in that** the control of the abrasive band takes account of at least one parameter (VMA, D) representative of the wear of the abrasive band during polishing of zones that are not in compliance, which parameter is selected from the following parameters: the distance (D) traveled by the abrasive band while polishing preceding zones; the mean speed of advance (VMA) of the part relative to the abrasive band while polishing the preceding zones; the mean travel speed of the abrasive band while polishing the preceding zones; and the duration of polishing the preceding zones.

2. A method according to claim 1, **characterized in that** the control of the abrasive band includes controlling the speed of advance (V) of the part relative to the abrasive band.

3. A method according to claim 2, **characterized in that** the travel speed of the abrasive band and the pressing force exerted by the abrasive band on the part (1) are constant during polishing.

4. A method according to any one of claims 1 to 3, **characterized in that** for each type of semi-finished part (1) to be polished, charts or mathematical relationships are determined beforehand seeking to determine the speed of advance of the part (1) relative to the abrasive band as a function of the thickness of material to be removed (E) in the zone (Z) that is not in compliance and as a function of at least one parameter (VMA, D) representative of the wear of the band while polishing zones (Z) that are not in compliance.

5. A method according to claim 4, **characterized in that** the charts or mathematical relationships seek to determine the speed of advance (V) of the part (1) relative to the abrasive band as a function of the thickness of material to be removed (E) in the zone (Z) that is not in compliance, of the mean speed of advance of the part relative to the abrasive band while polishing the preceding zones, and of the distance (D) traveled by the abrasive band while polishing the preceding zones.

6. A method according to claim 4 or claim 5, **characterized in that** the charts or the mathematical relationships are determined from parts that are the same type as the part (1) to be polished and that have already been subjected to polishing using an abrasive band of the same type, for which the thicknesses of material removed have been measured in various zones and for which the machining parameters of said zones are known, the measurements and the machining parameters defining a set of points.

7. A method according to claim 6, **characterized in that** it consists in interpolating from measured points so as to join them together by mathematical functions, e.g. such as polynomial functions or affined functions.

8. A method according to any one of claims 1 to 7, **characterized in that** the part is also subjected to final polishing seeking to remove a uniform thickness of material over at least a portion of the part (1).

9. A method according to any one of claims 1 to 8, **characterized in that** the part is a turbine engine blade (1).
